(19)

Europäisches
Patentamt
European
Patent Office
Office européen
des brevets

(11) **EP 4 279 247 A1**

(12) **EUROPEAN PATENT APPLICATION**
published in accordance with Art. 153(4) EPC

(43) Date of publication:
**22.11.2023 Bulletin 2023/47**

(21) Application number: **21919640.9**

(22) Date of filing: **10.12.2021**

(51) International Patent Classification (IPC):
**B29C 51/08** (2006.01)   **B32B 5/02** (2006.01)
**B32B 5/26** (2006.01)    **B32B 27/00** (2006.01)
**B32B 27/20** (2006.01)   **B32B 27/36** (2006.01)
**D04H 13/00** (2006.01)   **D04H 1/593** (2012.01)
**B32B 3/30** (2006.01)

(52) Cooperative Patent Classification (CPC):
**B29C 51/08; B32B 3/30; B32B 5/02; B32B 5/26;
B32B 27/00; B32B 27/20; B32B 27/36;
D04H 1/593; D04H 13/00**

(86) International application number:
**PCT/JP2021/045597**

(87) International publication number:
**WO 2022/153751 (21.07.2022 Gazette 2022/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.01.2021 JP 2021005984**

(71) Applicant: **TOYOBO MC Corporation
Osaka 530-0001 (JP)**

(72) Inventor: **TANAKA, Shigeki
Osaka-shi, Osaka 530-0001 (JP)**

(74) Representative: **Müller-Boré & Partner
Patentanwälte PartG mbB
Friedenheimer Brücke 21
80639 München (DE)**

(54) **DECORATIVE MOLDED BODY AND METHOD FOR MANUFACTURING SAME**

(57)    It is provided that a decorated molded body that has excellent design properties and lightweight properties and that exhibits excellent followability at the time of deep drawing; and a method for comparatively easily manufacturing the decorated molded body. A decorated molded body comprising a decorated layer B and a support layer A which are stacked in this order from a surface side of the decorated molded body, wherein the support layer A is any of a non-woven fabric (a) including at least two types of thermoplastic resin fibers, a non-woven fabric (b) including a thermoplastic resin fiber and an inorganic fiber, or a thermoplastic resin composition layer (c) having a thermoplastic resin in which an inorganic fiber is contained, the decorated layer B includes a thermoformable thermoplastic resin and is any of an easily-moldable polyester film (d) on a surface side of which a thermoplastic resin composition including a pigment or a dye is stacked, a non-woven fabric (e) including a composite fiber made from at least two types of thermoplastic resins having different melting points, the non-woven fabric (e) having a surface on which projections and recesses are formed through embossing, or a synthetic leather (f) having an organic fiber as a base material, and the decorated layer B and the support layer A are combined so as to be integrated with each other via a heat-bonding resin.

[Fig. 1]

**Description**

TECHNICAL FIELD

The present invention relates to: a decorated molded body that has high design properties, is lightweight, and exhibits excellent followability at the time of deep drawing molding; and a method for comparatively easily molding the decorated molded body.

A non-woven fabric that is lightweight and exhibits excellent followability at the time of deep drawing molding is suitable for being used for an industrial material, a building material, an automobile, and the like. In particular, in a case where a non-woven fabric that is lightweight and has excellent post-molding rigidity is used as a material for a molded body such as a cover at the bottom of an automobile or a dash silencer of the automobile, sound absorption performance and cushioning performance are easily obtained, and follow-up to the shape of a rough mold having a protrusion or the like is easily achieved. In addition, since the molded body is lightweight, it is possible to achieve significant enhancement of workability and energy saving due to reduction in the weight of an interior/exterior material of the automobile. In addition, a non-woven fabric in which inorganic fibers and fibers made from a thermoplastic resin are mixed together can be expected to have an excellent and high rigidity as a result of molding, and thus a part of a metal material can also be replaced with the non-woven fabric.

In addition, in a case where recycled carbon fibers taken out from a carbon fiber-reinforced resin made by using a thermosetting resin are used as a material for a support layer A, the recycled carbon fibers can contribute to reduction of environmental burden.

BACKGROUND ART

A majority of conventionally known moldable fiber aggregates are non-woven fabrics made mainly from staple fibers each having a fiber length of 32 to 100 mm, and moldability is imparted to such non-woven fabrics by using many heat-bonding fibers.

For example, each of Patent Literature 1 and Patent Literature 2 proposes a method for manufacturing a dense semi-finished product for an automobile equipment material by needle-punching and three-dimensionally entangling fiber webs of composite fibers each composed of: a core component made from polyethylene terephthalate; and a sheath component that is a particular copolymerized polyester made from ethylene glycol, adipic acid, terephthalic acid, isophthalic acid, or the like as a raw material. Each of the patent literatures describes that, in this method, the range of heating temperature is widened when heating and compression molding are performed. However, neither of the patent literatures describes design properties. In addition, since special components need to be used, superiority in terms of cost is lower than that in a case where a generally-used resin is used. In addition, a problem that adhesiveness to polypropylene widely used for members for automobiles is insufficient, is also anticipated.

Patent Literature 3 discloses a prepreg sheet including carbon fibers and thermoformable resin fibers. However, it is difficult to manufacture a sheet having a high weight per unit area in the form of a single layer, and thus a non-woven fabric having a low weight per unit area needs to be stacked. Therefore, a non-woven fabric including carbon fibers having high rigidities is likely to suffer a problem that fibers fall off or breakage at the time of handling. Consequently, a problem arises in that workability is poor. In addition, Patent Literature 3 does not describe any means for enhancing design properties for the prepreg sheet. A surface of a moldable non-woven fabric has projections and recesses derived from an uneven distribution of fibers in the non-woven fabric and the forms of the fibers themselves. Thus, the surface has insufficient glossiness owing to diffuse reflection thereon of light or is inferior in smoothness so that a problem arises in terms of design properties.

In addition, a fiber-reinforced composite material made by using a thermosetting resin is also used as a moldable material. An ordinarily-employed method is a method in which pre-arrayed glass fibers or carbon fibers made of continuous fibers, called UD fibers, impregnates with an epoxy resin or the like, and the epoxy resin or the like is thermally cured. By using continuous fibers, a high strength can be expected, but use of continuous fibers results in a problem in terms of inferiority in follow-up performance with respect to deep drawing molding. In addition, a problem arises in that, in general, it takes at least 5 to 15 minutes to complete thermal curing.

In many cases, the fiber-reinforced composite material made by using a thermosetting resin is used as an automobile interior/exterior member for which importance is placed on design properties. However, in many cases, problems arise in terms of the smoothness of a surface after molding. Thus, in actuality, in many cases, layers of coatings are superposed through spray coating or the like to impart smoothness, and, finally, a coating for imparting design properties is applied.

In Patent Literature 4, a thermoplastic resin film including spherical particles and reinforcing fibers of potassium titanate, wollastonite, or the like is used instead of performing such superposition of coatings, whereby surface smoothness is imparted. However, in the present invention, a molded body having design properties can be obtained without using such a particular member.

Patent Literature 5 discloses a composite decorated film including a releasable film and a transfer film. However, in Patent Literature 5, it is difficult to obtain a non-woven fabric composite molding material having high design properties sought in the present invention. In addition, in Patent Literature 5, insert molding involving injection molding is used for combination with a molded body, and a lightweight molded body that contains a non-woven fabric as a base material is not provided, the provision of such a molded body being an object of the present invention.

Each of Patent Literatures 6 and 7 discloses a metallic-tone laminate film and a decorated molded body made therefrom. Vacuum molding is assumed for this molding processing technology, and this film is required to have an adhesion-processed layer, and thus composite processing needs to be performed through peeling of an inner film. In addition, with vacuum molding processing being assumed, the heat resistance of the film for maintaining a vacuum is insufficient in a temperature range in which a thermoplastic resin is molded. Thus, practically, adaptation is difficult to achieve unless the thermosetting resin can be molded at 120 to 130°C. In addition, an ordinary vacuum molding machine has a problem that the molding pressure is insufficient in deep drawing molding processing for a thermoplastic resin material.

Each of Patent Literatures 8 and 9 discloses a decorated molded product in which a decorated film is combined with a fiber-reinforced plastic molded body made by using inorganic fibers and super engineering plastic fibers. Regarding each of the inventions described in Patent Literatures 8 and 9, it is described that, in a pasting step for the decorated film having a special texture, not press-molding but a vacuum molding method needs to be employed, and, the plastic molded body is required to have strength so as not to be deformed or distorted even if high pressure is applied to the plastic molded body at the time of vacuum molding. Therefore, inorganic fibers and thermoplastic super engineering plastic fibers are considered to be necessary. However, thermoplastic super engineering plastic fibers are very expensive, and thus the application range thereof is limited.

In the present invention, a non-woven fabric made by using fibers made from a generally-used thermoplastic resin such as polyolefin, polyester, or polyamide is used as a main constituent material of a support layer, and a molded body that is lightweight and that exhibits excellent followability at the time of deep drawing molding can be provided by using only one type of mold without performing vacuum molding. In this respect, the object of the present invention differs from those of the inventions described in Patent Literatures 8 and 9.

As mentioned above, in the present situation, a decorated molded body, of the present invention, that has excellent design properties and lightweight properties and that exhibits excellent followability at the time of deep drawing molding, has not been proposed hitherto.

CITATION LIST

PATENT LITERATURE

[PTL 1] Japanese Laid-Open Patent Publication No. 2018-95993
[PTL 2] Japanese Laid-Open Patent Publication No. 2018-9256
[PTL 3] Japanese Laid-Open Patent Publication No. 2017-95662
[PTL 4] Japanese Patent No. 6759491
[PTL 5] Japanese Laid-Open Patent Publication No. hei-10-58895
[PTL 6] Japanese Laid-Open Patent Publication No. 2004-299220
[PTL 7] Japanese Laid-Open Patent Publication No. 2004-299223
[PTL 8] Japanese Laid-Open Patent Publication No. 2015-44325
[PTL 9] Japanese Laid-Open Patent Publication No. 2015-44326

SUMMARY OF THE INVENTION

PROBLEMS TO BE SOLVED BY THE INVENTION

The present invention has been made in view of the problems of the conventional technologies and provides: a decorated molded body that has excellent design properties and lightweight properties and that exhibits excellent followability at the time of deep drawing molding; and a method for comparatively easily manufacturing the decorated molded body.

SOLUTION TO THE PROBLEMS

The decorated molded body and the method for manufacturing the same of the present invention which can solve the aforementioned problems are as follows.

1. A decorated molded body comprising

a decorated layer B and a support layer A which are stacked in this order from a surface side of the decorated molded body, wherein
the support layer A is any of

a non-woven fabric (a) including at least two types of thermoplastic resin fibers,
a non-woven fabric (b) including a thermoplastic resin fiber and an inorganic fiber, or
a thermoplastic resin composition layer (c) having a thermoplastic resin in which an inorganic fiber is contained,

the decorated layer B includes a thermoformable thermoplastic resin and is any of

an easily-moldable polyester film (d) on a surface side of which a thermoplastic resin composition including a pigment or a dye is stacked,
a non-woven fabric (e) including a composite fiber made from at least two types of thermoplastic resins having different melting points, the non-woven fabric (e) having a surface on which projections and recesses are formed through embossing, or
a synthetic leather (f) having an organic fiber as a base material, and

the decorated layer B and the support layer A are combined so as to be integrated with each other via a heat-bonding resin.

2. The decorated molded body according to the above 1, wherein

on a surface side of the decorated layer B, a transparent protective layer is further stacked, and
the protective layer is made of any of a transparent ink resulting from dispersing an alumina white pigment in a vehicle, a weather-resistant paint, or a weather-resistant film.

3. The decorated molded body according to the above 1, wherein

the decorated layer B is the non-woven fabric (e) including a composite fiber made from at least two types of thermoplastic resins having different melting points, the non-woven fabric (e) having a surface on which projections and recesses are formed through embossing,
the composite fiber is a heat-bonding resin having a core component and a sheath component that has a melting point lower, by at least 20°C, than a melting point of the core component, and
the heat-bonding resin is any of a copolymerized polyester resin, a polyolefin-based resin, or a polyamide-based resin.

4. The decorated molded body according to the above 1, wherein

the decorated layer B is

the easily-moldable polyester film (d) on a surface side of which a thermoplastic resin composition including a pigment or a dye is stacked, or
the synthetic leather (f) having an organic fiber as a base material,

a heat-bonding resin layer is present between the decorated layer B and the support layer A, and
the heat-bonding resin is a copolymerized polyester.

5. The decorated molded body according to the above 1, wherein

the support layer A is the non-woven fabric (b) including a thermoplastic resin fiber and an inorganic fiber,

the thermoplastic resin fiber has a fiber diameter of 10 to 25 $\mu$m, and
the inorganic fiber has a fiber diameter of 5 to 25 $\mu$m and has a fiber length of 7 to 100 mm.

6. A manufacturing method of the decorated molded body comprising
using only a pair of heating mold sets to perform hot press molding of the decorated molded body according to any one of the above 1 to 5 with a pressure of 1.5 to 10 MPa and with a temperature of 120 to 180°C.
7. The manufacturing method of the decorated molded body according to the above 6, further comprising:

engraving a dot pattern, a continuous pattern, or a drawing pattern on each of inner surfaces of the molds in advance; and
causing the pattern to take shape on the surface of the molded body having been subjected to the molding.

EFFECT OF THE INVENTION

The decorated molded body of the present invention has excellent design properties and lightweight properties and exhibits excellent followability at the time of deep drawing molding. In addition, the manufacturing method of the decorated molded body of the present invention involves a comparatively simple manufacturing process and involves use of a generally-used thermoplastic resin as a material. Thus, the method makes it possible to manufacture the decorated molded body inexpensively.

BRIEF DESCRIPTION OF THE DRAWINGS

[FIG. 1] FIG. 1 is a photograph taken before a decorated molded body in Example 1 was trimmed.
[FIG. 2] FIG. 2 is a photograph showing a surface of a decorated layer B of a decorated molded body in Example 2.
[FIG. 3] FIG. 3 is a photograph taken before a decorated molded body in Comparative Example 4 was trimmed, and is a photograph showing a state where the decorated layer B suffered floating.
[FIG. 4] FIG. 4 is a photograph taken after a decorated molded body in Comparative Example 5 was trimmed, and is a photograph showing a state where a decorated layer B was cracked at an edge portion of the molded body.

DESCRIPTION OF EMBODIMENTS

Hereinafter, the present invention will be described in detail.

(1) Support layer A

As a support layer A which is part of a decorated laminate of the present invention, any of the following three constituent materials (a) to (c) is used:

1) a non-woven fabric (a) including at least two types of thermoplastic resin fibers;
2) a non-woven fabric (b) including a thermoplastic resin fiber and an inorganic fiber; and
3) a thermoplastic resin composition layer (c) having a thermoplastic resin in which an inorganic fiber is contained.

1) Non-woven fabric (a) including at least two types of thermoplastic resin fibers

An embodiment in which the support layer A used in the present invention is a non-woven fabric including at least two types of thermoplastic resin fibers, is one of preferable embodiments.
The weight per unit area of the non-woven fabric used as the support layer A can be set as appropriate in consideration of mechanical strength properties necessary for a molded body. The weight per unit area is preferably 80 to 4000 g/m$^2$. From the viewpoint of rigidity and mechanical properties, the weight per unit area of the non-woven fabric is preferably not lower than 80 g/m$^2$. Meanwhile, from the viewpoint of the lightweight properties of and the installation space for the molded body, the weight per unit area of the non-woven fabric is preferably not higher than 4000 g/m$^2$.
The non-woven fabric not having yet been molded has a high void ratio. Therefore, it takes time to sufficiently transmit heat that is necessary for molding. From this viewpoint as well, the weight per unit area of the non-woven fabric is preferably not higher than 4000 g/m$^2$.
The proportion of the support layer A is preferably not lower than 40%, further preferably not lower than 50%, and particularly preferably not lower than 70% of the molded body on a mass basis. Meanwhile, if the proportion of the support layer A is not lower than 80% of the molded body on a mass basis, an effect of enhancing rigidity might decrease.

If the support layer A is a non-woven fabric, fibers forming the non-woven fabric may be staple fibers or long fibers. Staple-fiber non-woven fabrics have favorable thermoformabilities. Among the staple-fiber non-woven fabrics, a staple-fiber non-woven fabric in which core-sheath type composite fibers are used as at least some of the constituent fibers is preferable. In many cases, long fibers that are not crimped are arranged without being loosened or bent in a state where only a small number of bending points are present in the non-woven fabric. Consequently, the strength of each one of the fibers directly contributes to the strength of the non-woven fabric, and thus a high rigidity can be expected. This is considered to be because a long-fiber non-woven fabric has fibers that are mainly arrayed not in the thickness direction thereof but in a two-dimensional in-plane direction so that flexural rigidity and initial modulus become easy to increase.

The non-woven fabric may be used as a single layer or may be a non-woven fabric in which two or more layers of non-woven fabrics are combined. In the case of a single layer, there is a possibility that the number of restraint points of fibers becomes large, and moldability decreases. Considering this, an embodiment in which integration is performed through a needle punching method or the like is also one of the preferred embodiments.

In the case of stacking non-woven fabrics to obtain a high weight per unit area, non-woven fabrics identical to one another may be simply stacked. Alternatively, with the composition being set to differ between the front and the back, the proportion of fibers having high strengths may be increased at a portion close to a surface, and this is also one of the preferred embodiments for increasing the strength of the molded body.

In a case where the non-woven fabric is made from fibers identical to one another, a non-woven fabric formed from core-sheath type fibers each made from two or more types of thermoplastic resins is preferably used in order to increase the form stability. Alternatively, fibers each made from different thermoplastic resins may be mixed together. For mixing for a long-fiber non-woven fabric, different types of thermoplastic resins are ejected from adjacent spinning holes, whereby the long-fiber non-woven fabric can be manufactured.

As the thermoplastic resins used for the fibers that form the non-woven fabric, polyester, polyolefin, and polyamide are preferable, and polyester and polyolefin which are inexpensive and which are generally-used thermoplastic resins are particularly preferable. Examples of the polyester can include: homo-polyesters such as polybutylene terephthalate (PBT), polyethylene terephthalate (PET), polybutylene naphthalate (PBN), polyethylene naphthalate (PEN), polycyclohexylenedimethylene terephthalate (PCT), and polytrimethylene terephthalate (PTT); copolymerized polyesters of these homo-polyesters; and the like. Examples of the polyolefin can include polyethylene (PE), polypropylene (PP), and the like. A polyamide-based fiber such as nylon 6 (NY6) or nylon 66 (NY66) can also be used.

In addition, ordinarily-used additives, e.g., a paint, a pigment, a delustering agent, an antistatic agent, a flame retardant, and reinforcement particles, may be contained. In addition, a small amount of another polymer, e.g., a nylon, an olefin, and the like, can also be mixed as long as the object of the present invention is not impaired by doing so. In addition, a core-sheath type composite fiber and a side-by-side type composite fiber are preferably used. Combinations of PP/PET, copolymerized PET/PET, PBT/PET, and PE/PP are particularly preferable. For application to an automobile, use of composite fibers such as a PP/PET-based composite fiber, an NY6/PET-based composite fiber, and a copolymerized PET/PET composite fiber is also particularly suitable.

The fineness of each of the thermoplastic resin fibers that form the non-woven fabric is not particularly limited, but the average fiber diameter of the thermoplastic resin fibers is preferably 10 to 25 $\mu$m and particularly preferably 12 to 20 $\mu$m in terms of productivity, and for the reason that an average fiber diameter within this range makes it easy to obtain mechanical strength when the fibers are deformed and adhered. An embodiment in which the birefringence of the thermoplastic resin fibers is not higher than $100\times10^{-3}$ in order to increase the moldability thereof, is also one of the preferable embodiments.

2) Non-woven fabric (b) including thermoplastic resin fiber and inorganic fiber

An embodiment in which the support layer A used in the present invention is a non-woven fabric in which an inorganic fiber and a fiber made from a thermoplastic resin have been mixed together, is also one of the preferred embodiments.

The non-woven fabric desirably contains, as main components, a thermoplastic fiber having a fiber diameter of 10 to 25 $\mu$m and a fiber length of 28 to 100 mm, and an inorganic fiber having a fiber diameter of 5 to 25 $\mu$m and a fiber length of 7 to 100 mm. In a method for manufacturing the non-woven fabric, carding is preferably employed and an inorganic fiber having a large fiber length is preferably used.

Inorganic fibers are used in many cases for the purpose of improving the effect of reinforcing non-woven fabrics, and the mechanical strength is preferably increased by reducing voids through press work as much as possible.

As the inorganic fiber, a carbon fiber, a glass fiber, a basalt fiber, and the like are suitable. The fiber length of the inorganic fiber is preferably 7 to 100 mm, further preferably 10 to 80 mm, and particularly preferably 15 to 75 mm. The inorganic fiber is used mainly for enhancing the rigidity, and a larger length of the fiber tends to lead to obtainment of higher mechanical properties. However, if the fiber length of the inorganic fiber is larger than 100 mm, the enhancing effect is low. In addition, since the inorganic fiber is not crimped but is straight, it becomes difficult to manufacture a mixed non-woven fabric by using a carding machine. In addition, if an inorganic fiber having a large fiber length is used, the inorganic fiber is broken in a manufacturing step (in particular, a mixing step) in many cases. Meanwhile, in many cases, a short fiber length leads to a problem that the fiber falls off in a carding step. In addition, in a dry non-woven fabric manufacturing process, the yield thereof might deteriorate.

As thermoplastic resin fiber, a polypropylene-based fiber, a polyester-based fiber, a polyamide-based fiber, a polyphenylene sulfide fiber, a PTFE fiber, and the like are suitable.

3) Thermoplastic resin composition layer (c) having thermoplastic resin in which inorganic fiber is contained

An embodiment in which the support layer A used in the present invention is a thermoplastic resin composition layer having a thermoplastic resin in which an inorganic fiber is contained, is one of the preferable embodiments.

If a thermoplastic resin that melts during hot-pressing is used in the non-woven fabric (b), the thermoplastic resin composition layer having the thermoplastic resin in which the inorganic fiber is contained is obtained.

As the thermoplastic resin that melts during hot-pressing, a polyolefin-based resin, a polyester-based resin, and a polyamide-based resin are preferable.

(2) Decorated layer B

A decorated layer B includes a thermoformable thermoplastic resin and is any of: an easily-moldable polyester film (d) on a surface side of which a thermoplastic resin composition including a pigment or a dye is stacked; a non-woven fabric (e) including a composite fiber made from at least two types of thermoplastic resins having different melting points, the non-woven fabric (e) having a surface on which projections and recesses are formed through embossing; or a synthetic leather (f) including an organic fiber as a base material. The thickness of the decorated layer B is preferably 50 to 2000 $\mu$m. The thickness of the decorated layer B is preferably not smaller than 50 $\mu$m and particularly preferably not smaller than 80 $\mu$m in order to inhibit tearing during molding.

Meanwhile, the thickness of the decorated layer B is preferably not larger than 2000 $\mu$m and particularly preferably not larger than 1200 $\mu$m from the viewpoint of thermal conductivity during thermoforming. If the thermal conductivity during thermoforming deteriorates, the time required for molding is lengthened.

1) Easily-moldable polyester film (d) on the surface side of which thermoplastic resin composition including pigment or dye is stacked

The elongations in both a longitudinal direction and a transverse direction of the easily-moldable polyester film are preferably not lower than 100% and particularly preferably not lower than 200%. In order to obtain a film having high elongations, the stretch ratios in both directions are preferably set to be not higher than 2.5, further preferably set to be not higher than 2.0, and particularly preferably set to be 1.5. If the stretch ratios are high, follow-up to deformation might become unable to be achieved at the time of molding in a state where the easily-moldable polyester film is stacked on the support layer A. Consequently, breaks or wrinkles might result. If heat setting is performed at a temperature (for example, about 3 to 20°C) slightly higher than a thermoforming temperature, wrinkles can be prevented from being generated as a result of shrinkage of the film by heat during molding. Thus, this heat setting is preferable.

The decorated layer B is obtained by stacking a thermoplastic resin composition including a pigment or a dye onto a surface side of the easily-moldable film. The pigment or the dye only has to be selected according to the desired design from among commercially available products. A method for stacking the thermoplastic resin composition including the pigment or the dye onto the film preferably involves application or printing by an inkjet printer, gravure printing, another transfer means, or the like.

2) Non-woven fabric (e) including composite fibers made from at least two types of thermoplastic resins having different melting points, said non-woven fabric (e) having a surface on which projection and recess are formed through embossing

The non-woven fabric (e) includes composite fibers made from at least two types of thermoplastic resins having different melting points. Further, the non-woven fabric (e) is preferably made from composite fiber and thermoplastic resin fiber. The composite fiber is preferably a core-sheath type composite fiber in which the melting point of a sheath component is lower, by at least 20°C, than the melting point of a core component. It is further preferable that the sheath component is a heat-bonding resin having a melting point that is lower, by at least 30°C, than the melting point of the core component. The heat-bonding resin is preferably any of a copolymerized polyester resin, a polyolefin-based resin, or a polyamide-based resin. It is particularly preferable that the composite fiber is a core-sheath type composite fiber in which: the core component is a polyethylene terephthalate resin; and the sheath component is a copolymerized polyester resin. The thermoplastic resin fiber to be used together with the composite fiber is preferably a polyethylene terephthalate fiber.

In addition, the surface side of the non-woven fabric (e) is decorated by forming thereon a dot pattern, a continuous pattern, or a drawing pattern through embossing. Embossing may be performed on the non-woven fabric (e) before molding, or may be performed thereon during or after molding.

3) Synthetic leather (f) including organic fiber as base material

In a case where the decorated layer B is synthetic leather (examples thereof also include artificial leather), a non-woven fabric-based material or a knitted-fabric-based material manufactured by impregnating thermoplastic fibers with a resin such as urethane is preferable. For a skin resin-impregnated layer of synthetic leather, either a wet process or a dry process may be employed. The thickness of the synthetic leather is preferably in a range of 600 to 1100 μm.

In a case of using a non-woven fabric having high design properties, a polyester-based fiber or a polyamide-based fiber is preferably contained as a main component.

(3) Heat-bonding resin

In the decorated molded body of the present invention, the decorated layer B and the support layer A are combined so as to be integrated with each other via a heat-bonding resin. The phrase "combined so as to be integrated with each other" in the present invention refers to a state where: the support layer A and the decorated layer B are adhered to each other over almost all entire contact surfaces thereof to be joined together via the heat-bonding resin; and there is no portion in which joining has failed owing to floating or large wrinkles at an interface having a width of not smaller than about 3 mm.

In a case where the decorated layer B or the support layer A is a heat-bonding non-woven fabric, the heat-bonding resin is: a constituent material of a thermoplastic resin fiber that has a low melting point and that forms the non-woven fabric; or a constituent material of a layer obtained by applying the heat-bonding resin onto an easily-moldable film or a heat-bonding sheet interposed between the decorated layer B and the support layer A. Each of these heat-bonding resins melts during hot-pressing, thereby enabling the decorated layer B and the support layer A to be combined so as to be integrated with each other via the heat-bonding resin.

The heat-bonding resin is a thermoplastic resin that can be melted during hot-pressing, and a polyamide-based resin, a polyolefin-based resin, or a copolymerized polyester resin is preferable.

For the heat-bonding non-woven fabric, a core-sheath type composite fiber in which the melting point of a sheath component is lower than the melting point of a core component is preferably used. It is particularly preferable that: the core component is a polyethylene terephthalate resin; and the sheath component is a copolymerized polyester resin or a modified polyolefin resin.

As the heat-bonding sheet, an amorphous copolymerized polyester resin (VYLON GK-680 manufactured by Toyobo Co., Ltd.), a film (POTICON film manufactured by Otsuka Chemical Co., Ltd.) made from a thermoplastic resin containing a potassium titanate fiber, or the like is available as a commercially available product.

In a case where the support layer A or the decorated layer B is a heat-bonding non-woven fabric made from the core-sheath type composite fiber, it is sometimes necessary to inhibit floating of the decorated layer B when molds are detached after molding. A non-woven fabric has minute projections and recesses on the surface thereof. Thus, if the heat-bonding non-woven fabric is used as the support layer A or the decorated layer B, a strong adhesive force can be expected. If the air permeability of the heat-bonding non-woven fabric is not higher than 10 cc/cm$^2$·sec, there is a case where air does not escape from inside the heat-bonding non-woven fabric. In this case, floating might occur between the support layer A and the decorated layer B. Thus, in this case, the heat-bonding sheet is preferably provided between the support layer A and the decorated layer B.

If the thickness of the heat-bonding film or the heat-bonding non-woven fabric is 10 to 60 μm, an appropriate adhesive force can be obtained.

In a case where the easily-moldable polyester film is used as the decorated layer B, a heat-bonding resin layer may be stacked on a surface, of the easily-moldable polyester film, that is opposite to the surface on which the thermoplastic resin composition including the pigment or the dye is stacked. For example, the same adhesive force improvement effect can be expected to be obtained also by applying a coating liquid of an amorphous copolymerized polyester resin (VYLON RV-200, EV-103 manufactured by Toyobo Co., Ltd.) such that the thickness of the application liquid is 3 to 5 μm.

(4) Protective layer

Regarding the decorated layer B of the decorated molded body of the present invention, a transparent protective layer is preferably stacked on a surface side (a surface side opposite to the support layer A) of the decorated layer B in order to protect the decorated layer. The protective layer is preferably made of any of: a transparent ink resulting from dispersing an alumina white pigment in a vehicle; a weather-resistant paint; or a weather-resistant film. Examples of the protective layer include: a layer of a medium that is a transparent ink resulting from dispersing an alumina white pigment in a vehicle; a layer of a resin or a paint including a coloring pigment; a layer of a weather-resistant fluorine resin paint; a layer of a weather-resistant film (made from vinyl chloride, acrylic, a high-density polyethylene, a polyester-based substance, or the like); and the like. The protective layer is particularly preferably made of any of: a medium that is a transparent ink resulting from dispersing an alumina white pigment in a vehicle; a weather-resistant fluorine resin paint; or a weather-resistant film made from vinyl chloride, a high-density polyethylene, or the like.

For the protective layer, a weatherproof agent such as an ultraviolet absorber is also preferably used as necessary. An overcoat varnish for shrink films or the like can also be suitably used in consideration of combination with the thermoplastic resin used for the decorated layer B. For example, an overcoat medium (EXP14008 manufactured by OSAKA PRINTING INK MFG., CO., LTD.) and the like are commercially available.

(5) Method for molding the decorated molded body

Next, a method for molding the decorated molded body of the present invention will be described.

As the method for molding the decorated molded body of the present invention, any of ordinary heating-pressing methods can be employed, and hot-pressing methods are recommended rather than cold-pressing methods. For example, single plate press-molding may be performed, passage between heating metal press rollers capable of manufacturing long cloth may be performed, or a high-temperature metal belt press machine may be used. However, special machining is necessary for performing three-dimensional shaping.

In addition, it is also preferable to first create a flat plate by a preliminary press and then perform three-dimensional shaping by a press machine again, to obtain a three-dimensional structure. In a case of using a high-temperature metal belt press machine for preliminary press work, conditions are set according to a thermoplastic resin material, and it is also preferable to control a loading density by performing press work under a condition of a temperature of 140 to 330°C and a pressure of 0.3 to 5 MPa. By reducing the pressure, voids between fibers can be maintained, and sound absorption performance is expected.

In a case where the thermoplastic resin composition layer (c) having the thermoplastic resin in which the inorganic fiber is contained is used as the support layer A used in the present invention, a mode in which, after a non-woven fabric including the thermoplastic resin fiber and the inorganic fiber is thermoformed, air substantially escapes so as to obtain a state where there is almost no void, is also one of preferable modes.

The decorated molded body of the present invention is preferably subjected to hot press molding with a pressure of 1.5 to 10 MPa and with a temperature of 120 to 180°C by using only a pair of heating mold sets.

Vacuum molding, TOM molding, or the like involves use of an adhesion layer or execution of machining in which stress is applied to a to-be-molded body in many cases. By omitting the said use and execution, the process can be simplified, and manufacturing costs for molds can be reduced. By omitting vacuum molding, the rigidity necessary for counteracting stress received at the time of molding processing can be reduced. In addition, it becomes possible for a resin layer (decorated layer B) having design properties to be integrally pressed in a state of being pasted on a non-woven fabric (support layer A) having a comparatively low rigidity. Meanwhile, injection molding or insert molding might lead to denature of the moldable decorated layer B owing to influence of heat, or might make it likely to generate wrinkles at the time of performing deep drawing molding.

If the pressure in hot press molding is higher than 10 MPa, the design surface of the decorated molded body might be deformed, or a part of the decorated layer might be cracked at a periphery of a molded portion having a high deformation ratio. Meanwhile, if the pressure is lower than 1.5 MPa, it becomes difficult to reproduce minute projections and recesses with expected design properties through molding.

In thermoforming, in a case where a non-woven fabric is used as the support layer A and in a case where the weight per unit area of the non-woven fabric A is higher than 300 g/m$^2$, a mode in which only the non-woven fabric is molded in advance, the decorated layer B is superposed thereon, and a second time of pressing is performed with the same molds, is also one of the preferable modes. By performing molding in advance, the surface is smoothed, whereby the surface of the decorated layer B can be finished more cleanly.

Further, a mode in which a dot pattern, a continuous pattern, or a drawing pattern is engraved in advance on each of the inner surfaces of the molds by using an NC processing machine or the like, and the pattern is caused to take shape on a surface of the molded body having been subjected to the molding, is also one of the preferable modes. If the molding pressure is increased, there is a case where projections and recesses of an embossing pattern or the like formed in advance become unclear owing to hot-pressing. In such a case, enhancement can be achieved through the above method.

In addition, if a trimming blade is attached to a mold as necessary, labor in the process can be saved.

EXAMPLES

Next, the present invention will be specifically described by means of examples and comparative examples. The present invention is not limited to the examples. Physical property values in the examples and comparative examples were measured according to the following methods.

<Weight per Unit Area>

A 20-cm square piece was cut out from a non-woven fabric, the weight (g) of the piece was measured, and the measured value was converted into a value per 1 m². This value was used as a weight per unit area. The unit is g/m².

<Thickness and Apparent Density>

The thickness was measured under a load of 20 g/cm². As the apparent density, a value was obtained by dividing the weight per unit area of a non-woven fabric by the thickness thereof. Measurement was performed according to JIS L 1913 (2010).

$$\text{Loading density} = A/B \ (g/cm^3)$$

A: weight per unit area (g/m²)
B: thickness (cm)

<Appearance of Decorated Molded Body>

The appearance of a decorated molded body was visually evaluated on a three-level scale. "1" was defined as a particularly favorable result, and "3" was defined as a result in which a problem arises in terms of design properties owing to poor surface smoothness or inability to perform sharp molding of an edge portion of a molding surface. "2" was defined as an intermediate result therebetween.

(Example 1)

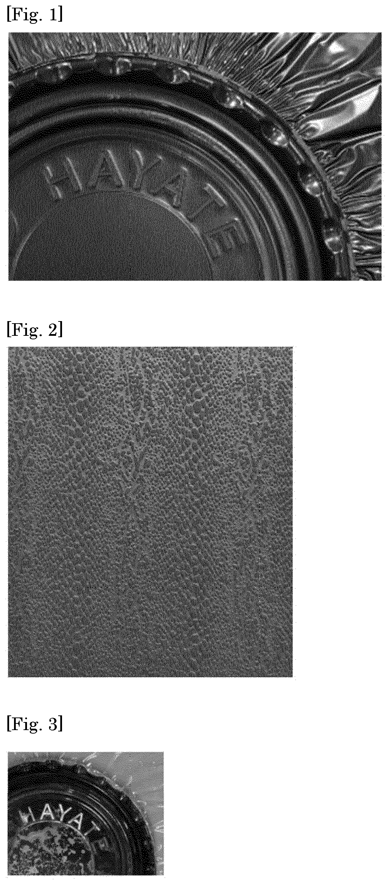

A carded non-woven fabric (weight per unit area: 500 g/m²) made from staple fibers which each had a fineness of 3.3 dtex and in each of which a core component was made from polyethylene terephthalate and a sheath component was made from a polypropylene modified with maleic acid (mass ratio (core/sheath): 50/50), was obtained. Needle punching was performed on the carded non-woven fabric by using an ORGAN FPD220 (40SM) with the number of penetrations being 50 and with the needle depth being 10 mm. Consequently, a support layer A was made. The post-conversion apparent density of the support layer A was 0.18 g/cm³.
Next, a coating liquid resulting from dispersing a blue pigment in a polyurethane-based resin was applied and dried on one surface of an easily-moldable polyester film (a low-stretch-ratio film processed at a heat setting temperature of 150°C) having a thickness of 100 μm, whereby the resultant application layer was formed as a decorated layer B.
Then, an overcoat medium (EXP14008 manufactured by OSAKA PRINTING INK MFG., CO., LTD.) was, as a protective layer, applied onto the application layer so as to have a thickness of 15 μm after being dried. The protective layer was disposed of so as to be the outermost layer at the time of press molding.
Further, a heat-bonding sheet (VYLON GK-680 manufactured by Toyobo Co., Ltd.) having a thickness of 30 μm was superposed between the support layer A and the decorated layer B, and hot press molding was performed at a molding temperature of 160°C (for both upper and lower molds) and at a pressure of 3 MPa. Conditions at the time of the press molding are indicated in Table 1. The apparent density of the obtained decorated molded body was 0.98 g/cm³.
As shown in the photograph in FIG. 1, the decorated molded body obtained in Example 1 experienced combination and integration, the decorated molded body not having yet been trimmed had an excellent appearance, a detailed molded portion thereof was also sharp and favorable, and the decorated molded body had excellent post-deep-drawing molding followability. In addition, the decorated portion suffered no fogging or floating and was favorable. The configuration and evaluation results of the obtained decorated molded body are indicated in Table 2.

(Example 2)

A long-fiber non-woven fabric having a weight per unit area of 250 g/m² was made by using core-sheath type composite fibers which each had a fineness of 5.5 dtex and in each of which a core component was made from polyethylene terephthalate and a sheath component was made from a copolymerized polyester having a low melting point (melting point: 135°C) (mass ratio (core/sheath): 50/50). Three layers each formed by this long-fiber non-woven fabric were stacked, and needle punching was performed by using an ORGAN FPD220 (40SM) with the number of penetrations being 80 and with the needle depth being 13 mm. Consequently, a support layer A was made. The post-conversion apparent density of the obtained long fiber web was 0.20 g/cm$^3$.

Next, polyethylene terephthalate fibers each having a fineness of 2.2 dtex and a fiber length of 51 mm, and heat-bonding fibers which each had a fineness of 3.3 dtex and a fiber length of 51 mm and in each of which a core component was made from polyethylene terephthalate and a sheath component was made from a polyester having a low melting point (melting point: 150°C) (mass ratio (core/sheath): 50/50), were mixed together at a mass ratio of 50:50 in percentage through carding. Consequently, a non-woven fabric having a weight per unit area of 300 g/m$^2$ was made. Then, needle punching was performed with the number of penetrations being 30 and the needle depth being 10 mm. Then, embossing was performed at low pressure at 170°C so as to obtain a pattern shown in a photograph (magnification: 2-fold) in FIG. 2, thereby imparting design properties. The resultant layer was used as a decorated layer B.

The decorated layer B was placed on the support layer A, and hot press molding was performed at a molding temperature of 160°C and at a pressure of 3 MPa by using the same molds as those in Example 1. Conditions at the time of the press molding are indicated in Table 1. The apparent density of the obtained decorated molded body was 0.85 g/cm$^3$.

The decorated molded body obtained in Example 2 experienced combination and integration and had an excellent appearance, a detailed molded portion thereof was sharp and favorable, and the decorated molded body had excellent post-deep-drawing molding followability. In addition, the decorated portion had no stains or unevenness, and was favorable. The configuration and evaluation results of the obtained decorated molded body are indicated in Table 2. A photograph (magnification: 2-fold) showing the surface of the decorated layer B of the decorated molded body in Example 2 is shown in FIG. 2.

(Example 3)

With respect to the support layer A used in Example 1, a synthetic leather (PARMIA BOOCOC (having a weight per unit area of 125 g/m$^2$ and a thickness of 650 μm) manufactured by TOYO CLOTH CO., LTD.) was used as a decorated layer B, the heat-bonding sheet used in Example 1 was interposed between the support layer A and the decorated layer B, and hot press molding was performed at a molding temperature (for both upper and lower molds) of 160°C and at a pressure of 3 MPa. Conditions at the time of the press molding are indicated in Table 1. The apparent density of the obtained decorated molded body was 0.86 g/cm$^3$.

The decorated molded body obtained in Example 3 experienced combination and integration and had an excellent appearance, a detailed molded portion thereof was sharp and favorable, and the decorated molded body had excellent post-deep-drawing molding followability. In addition, the decorated portion had no stains or unevenness and was favorable. The configuration and evaluation results of the obtained decorated molded body are indicated in Table 2.

(Example 4)

Carbon fibers having an average fiber length of 5 cm and each having a diameter of 5 μm, and nylon 6 fibers each having a fiber length of 51 mm and a fineness of 3.3 dtex, were mixed together at a volume ratio of 40:60 in percentage through carding. Consequently, five non-woven fabrics each having a weight per unit area of 250 g/m$^2$ were made.

Then, press work was performed by using a metal belt press machine (manufactured by KBK STEEL PRODUCTS CO., LTD.) at a temperature of 190°C and at a pressure of 0.1 MPa. The apparent density was 0.83 g/cm$^3$.

Further, hot press molding was performed at a molding temperature of 160°C and at a pressure of 7 MPa. The apparent density was 0.78 g/cm$^3$. Subsequently, hot press molding was performed at a molding temperature of 260°C and at a pressure of 7 MPa. The apparent density was 1.27 g/cm$^3$. The obtained laminated non-woven fabric was used as a support layer A.

On the support layer A, the heat-bonding sheet and the decorated layer B used in Example 1 were superposed in this order, and hot press molding was performed at a molding temperature of 160°C and at a pressure of 3.5 MPa. Conditions at the time of the press molding are indicated in Table 1. The apparent density was 1.3 g/cm$^3$.

The decorated molded body obtained in Example 4 experienced combination and integration and had an excellent appearance, a detailed molded portion thereof was sharp and favorable, and the decorated molded body had excellent post-deep-drawing molding followability. In addition, the decorated portion had no fogging or floating, and was favorable. The configuration and evaluation results of the obtained decorated molded body are indicated in Table 2.

(Comparative Example 1)

Molding was performed in the same manner as that for Example 4, except that no heat-bonding sheet was used. Conditions at the time of the press molding are indicated in Table 1. Although there was no problem with molded shape, the decorated layer B adhered to the upper mold and suffered floating at the time of detaching the mold. Consequently, no decorated molded body having experienced combination and integration was able to be obtained.

(Comparative Examples 2 to 5)

The same materials as in Example 1 were used in the tests, but the molding conditions were changed from those in Example 1 to conduct the tests. Conditions at the time of the press molding are indicated in Table 1.

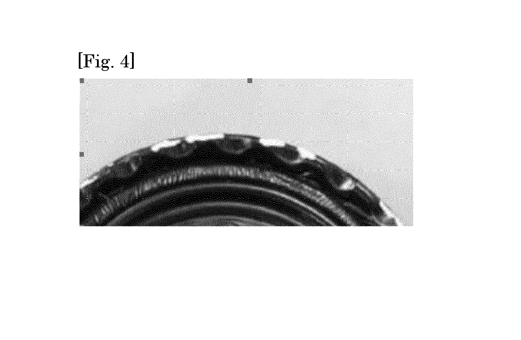

Regarding decorated molded bodies obtained in Comparative Examples 2 to 5, no decorated molded bodies having experienced combination and integration were able to be obtained. Therefore, each of the decorated molded bodies was inferior in appearance, and at least one of the post-deep-drawing molded state thereof and the state of the decorated portion was unsatisfactory. The structures and evaluation results of the obtained molded bodies are indicated in Table 3. In the decorated molded body in Comparative Example 4, the decorated layer B suffered from floating as shown in a photograph in FIG. 3. In the decorated molded body in Comparative Example 5, the decorated layer B was cracked at an edge portion of the molded body. A photograph in FIG. 4 shows this cracked state.

[Table 1]

|  | Pressing temperature (°C) | Pressing pressure (Mpa) |
|---|---|---|
| Example 1 | 160 | 3. 0 |
| Example 2 | 160 | 3. 0 |
| Example 3 | 160 | 3. 0 |
| Example 4 | 160 | 3. 5 |
| Comparative Example 1 | 160 | 3. 5 |
| Comparative Example 2 | 185 | 3. 0 |
| Comparative Example 3 | 115 | 5. 0 |
| Comparative Example 4 | 160 | 1. 2 |
| Comparative Example 5 | 160 | 12.0 |

[Table 2]

|  | Example 1 | Example 2 | Example 3 | Example 4 |
|---|---|---|---|---|
| Decorated layer B | Coated easily-moldable film with pigment coating liquid | Embossed staple-fiber non-woven fabric (core-sheath type composite fiber was used) | Synthetic leather | Coated easily-moldable film with pigment coating liquid |
| Heat-bonding resin | · Maleic acid-modified PP (support layer A)<br><br>· Copolymerized polyester (heat-bonding sheet) | · Copolymerized polyester (support body A)<br>· Copolymerized polyester (decorated layer B) | · Maleic acid-modified PP (support layer A)<br>· Copolymerized polyester (heat-bonding sheet) | Copolymerized polyester (heat-bonding sheet) |
| Support layer A | Staple-fiber non-woven fabric (core-sheath type composite fiber was used) | Long-fiber non-woven fabric (core-sheath type composite fiber was used) | Two-component staple-fiber non-woven fabric | Inorganic fiber/nylon fiber non-woven fabric |

(continued)

| | Example 1 | Example 2 | Example 3 | Example 4 |
|---|---|---|---|---|
| Combination and integration | ○ | ○ | ○ | ○ |
| Visual evaluation of appearance | 1 | 1 | 1 | 1 |
| Molded state | Detailed molded portion was also sharp and favorable | Same as on left | Same as on left | Same as on left |
| State of decorated layer B | Decorated portion suffered no fogging or floating, and was favorable | Decorated portion had no stain or unevenness, and was favorable | Same as on left | Decorated portion suffered no fogging or floating, and was favorable |

[Table 3]

| | Comparative Example 1 | Comparative Example 2 | Comparative Example 3 | Comparative Example 4 | Comparative Example 5 |
|---|---|---|---|---|---|
| Decorated layer B | Coated easily-moldable film with pigment coating liquid | Same as on left | Same as on left | Same as on left | Same as on left |
| Heat-bonding resin | Absent | · Maleic acid-modified PP (support layer A) · Copolymerized polyester (heat-bonding sheet) | Same as on left | Same as on left | Same as on left |
| Support layer A | Staple-fiber non-woven fabric (core-sheath type composite fiber was used) * Same as in Example 4 | Staple-fiber non-woven fabric (core-sheath type composite fber was used) * Same as in Example 1 | Same as on left | Same as on left | Same as on left |
| Combination and integration | × | × | × | × | × |
| Visual evaluation of appearance | 1 | 2 | 3 | 3 | 3 |

(continued)

| | Comparative Example 1 | Comparative Example 2 | Comparative Example 3 | Comparative Example 4 | Comparative Example 5 |
|---|---|---|---|---|---|
| Molded state | · Detailed molded portion was also sharp and favorable <br> · Decorated layer peeled at time of detaching mold | Decorated layer peeled at time of detaching mold | Shape of mold was not sharply reflected, resulting in unclearness | Detailed molded portion had rounded edge and was defective | Detailed molded portion was also sharp and favorable |
| State of decorated layer B | Same as on left | Wrinkles were generated on decorated portion | Many floated portions were generated at center of decorated portion | Floated portion was generated at center of decorated portion | Decorated layer was cracked at detailed edge portion |

**Claims**

1. A decorated molded body comprising

   a decorated layer B and a support layer A which are stacked in this order from a surface side of the decorated molded body, wherein
   the support layer A is any of

   a non-woven fabric (a) including at least two types of thermoplastic resin fibers,
   a non-woven fabric (b) including a thermoplastic resin fiber and an inorganic fiber, or
   a thermoplastic resin composition layer (c) having a thermoplastic resin in which an inorganic fiber is contained,

   the decorated layer B includes a thermoformable thermoplastic resin and is any of

   an easily-moldable polyester film (d) on a surface side of which a thermoplastic resin composition including a pigment or a dye is stacked,
   a non-woven fabric (e) including a composite fiber made from at least two types of thermoplastic resins having different melting points, the non-woven fabric (e) having a surface on which projections and recesses are formed through embossing, or
   a synthetic leather (f) having an organic fiber as a base material, and

   the decorated layer B and the support layer A are combined so as to be integrated with each other via a heat-bonding resin.

2. The decorated molded body according to claim 1, wherein

   on a surface side of the decorated layer B, a transparent protective layer is further stacked, and
   the protective layer is made of any of a transparent ink resulting from dispersing an alumina white pigment in a vehicle, a weather-resistant paint, or a weather-resistant film.

3. The decorated molded body according to claim 1, wherein

   the decorated layer B is the non-woven fabric (e) including a composite fiber made from at least two types of thermoplastic resins having different melting points, the non-woven fabric (e) having a surface on which projections and recesses are formed through embossing,
   the composite fiber is a heat-bonding resin having a core component and a sheath component that has a melting point lower, by at least 20°C, than a melting point of the core component, and
   the heat-bonding resin is any of a copolymerized polyester resin, a polyolefin-based resin, or a polyamide-based resin.

4. The decorated molded body according to claim 1, wherein

the decorated layer B is

the easily-moldable polyester film (d) on a surface side of which a thermoplastic resin composition including a pigment or a dye is stacked, or
the synthetic leather (f) having an organic fiber as a base material,

a heat-bonding resin layer is present between the decorated layer B and the support layer A, and
the heat-bonding resin is a copolymerized polyester.

5. The decorated molded body according to claim 1, wherein

the support layer A is the non-woven fabric (b) including a thermoplastic resin fiber and an inorganic fiber,
the thermoplastic resin fiber has a fiber diameter of 10 to 25 $\mu$m, and
the inorganic fiber has a fiber diameter of 5 to 25 $\mu$m and has a fiber length of 7 to 100 mm.

6. A manufacturing method of the decorated molded body comprising
using only a pair of heating mold sets to perform hot press molding of the decorated molded body according to any one of claims 1 to 5 with a pressure of 1.5 to 10 MPa and with a temperature of 120 to 180°C.

7. The manufacturing method of the decorated molded body according to claim 6, further comprising:

engraving a dot pattern, a continuous pattern, or a drawing pattern on each of inner surfaces of the molds in advance; and
causing the pattern to take shape on the surface of the molded body having been subjected to the molding.

[Fig. 1]

[Fig. 2]

[Fig. 3]

[Fig. 4]

## INTERNATIONAL SEARCH REPORT

International application No.

**PCT/JP2021/045597**

### A. CLASSIFICATION OF SUBJECT MATTER

***B29C 51/08***(2006.01)i; ***B32B 5/02***(2006.01)i; ***B32B 5/26***(2006.01)i; ***B32B 27/00***(2006.01)i; ***B32B 27/20***(2006.01)i; ***B32B 27/36***(2006.01)i; ***D04H 13/00***(2006.01)i; ***D04H 1/593***(2012.01)i; ***B32B 3/30***(2006.01)i
FI: B32B27/00 E; B32B27/20 A; B32B27/36; B32B3/30; B32B5/26; B32B5/02 Z; D04H13/00; D04H1/593; B29C51/08

According to International Patent Classification (IPC) or to both national classification and IPC

### B. FIELDS SEARCHED

Minimum documentation searched (classification system followed by classification symbols)

B29C51/08; B32B5/02; B32B5/26; B32B27/00; B32B27/20; B32B27/36; D04H13/00; D04H1/593; B32B3/30

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2014-119744 A (ORIE CO LTD) 30 June 2014 (2014-06-30)<br>examples | 1-7 |
| A | JP 3203327 U (KINSEI SEISHI KK) 24 March 2016 (2016-03-24)<br>entire text | 1-7 |
| X | JP 3223851 U (UNITIKA LTD) 07 November 2019 (2019-11-07)<br>examples | 1-3, 6, 7 |
| X | JP 7-216756 A (KANEBO LTD) 15 August 1995 (1995-08-15)<br>examples | 1, 2, 4, 6, 7 |
| X | JP 2007-203686 A (TORAY IND INC) 16 August 2007 (2007-08-16)<br>examples | 1, 2, 4, 6, 7 |
| A | JP 2018-150657 A (JAPAN VILENE CO LTD) 27 September 2018 (2018-09-27)<br>entire text | 1-7 |

☑ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 February 2022** | **08 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| International application No. |
| --- |
| **PCT/JP2021/045597** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2000-229369 A (JAPAN VILENE CO LTD) 22 August 2000 (2000-08-22) <br> entire text | 1-7 |
| A | JP 2001-18314 A (JAPAN VILENE CO LTD) 23 January 2001 (2001-01-23) <br> entire text | 1-7 |
| A | JP 2015-44326 A (OJI HOLDINGS CORP) 12 March 2015 (2015-03-12) <br> entire text | 1-7 |
| A | JP 2016-79553 A (OJI HOLDINGS CORP) 16 May 2016 (2016-05-16) <br> entire text | 1-7 |
| A | JP 2007-321999 A (TORAY IND INC) 13 December 2007 (2007-12-13) <br> entire text | 1-7 |
| A | JP 2005-335279 A (DU PONT TORAY CO LTD) 08 December 2005 (2005-12-08) <br> entire text | 1-7 |

Form PCT/ISA/210 (second sheet) (January 2015)

## INTERNATIONAL SEARCH REPORT

International application No.

**PCT/JP2021/045597**

| Box No. III | Observations where unity of invention is lacking (Continuation of item 3 of first sheet) |
|---|---|

This International Searching Authority found multiple inventions in this international application, as follows:

The technical feature common to the invention in claim 1 of the present application is a decorative formed body formed by laminating a decorative layer B and support layer A in this order from the surface side, the decorative formed body being characterized in which the decorative layer B and the support layer A are compositely integrated with a heat adhesive resin therebetween, said technical feature is known in documents 1 and 2, and thus cannot be said to be the special technical feature (documents 1 and 2: example).

Document 1: JP 2014-119744 A
Document 2: JP 3203327

Therefore, in the invention in claim 1 of the present application, it is considered that nine inventions are described as below by combining the support layer A and the decorative layer B.
1. The support layer A is (a), and the decorative layer B is (d).
2. The support layer A is (a), and the decorative layer B is (e).
3. The support layer A is (a), and the decorative layer B is (f).
4. The support layer A is (b), and the decorative layer B is (d).
5. The support layer A is (b), and the decorative layer B is (e).
6. The support layer A is (b), and the decorative layer B is (f).
7. The support layer A is (c), and the decorative layer B is (d).
8. The support layer A is (c), and the decorative layer B is (e).
9. The support layer A is (c), and the decorative layer B is (f).
The same applies to claims 2-7 referring to claim 1 of the present invention.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☑ As only some of the required additional search fees were timely paid by the applicant, this international search report covers only those claims for which fees were paid, specifically claims Nos.: **The international search report has been created regarding the invention made by the combination below in the invention in claims 1-7 of the present application.  1. The support layer A is (a), and the decorative layer B is (d). 2. The support layer A is (a), and the decorative layer B is (e). 3. The support layer A is (a), and the decorative layer B is (f). 4. The support layer A is (b), and the decorative layer B is (d).**

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**
Information on patent family members

International application No.

**PCT/JP2021/045597**

| Patent document cited in search report | | | Publication date (day/month/year) | Patent family member(s) | Publication date (day/month/year) |
|---|---|---|---|---|---|
| JP | 2014-119744 | A | 30 June 2014 | (Family: none) | |
| JP | 3203327 | U | 24 March 2016 | (Family: none) | |
| JP | 3223851 | U | 07 November 2019 | (Family: none) | |
| JP | 7-216756 | A | 15 August 1995 | (Family: none) | |
| JP | 2007-203686 | A | 16 August 2007 | (Family: none) | |
| JP | 2018-150657 | A | 27 September 2018 | (Family: none) | |
| JP | 2000-229369 | A | 22 August 2000 | US     2005/0249931     A1 entire text | |
| JP | 2001-18314 | A | 23 January 2001 | (Family: none) | |
| JP | 2015-44326 | A | 12 March 2015 | (Family: none) | |
| JP | 2016-79553 | A | 16 May 2016 | (Family: none) | |
| JP | 2007-321999 | A | 13 December 2007 | (Family: none) | |
| JP | 2005-335279 | A | 08 December 2005 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018095993 A
- JP 2018009256 A
- JP 2017095662 A
- JP 6759491 B
- JP 10058895 A
- JP 2004299220 A
- JP 2004299223 A
- JP 2015044325 A
- JP 2015044326 A